# FASCICULE DE BREVET EUROPEEN

(11) **EP 3 933 249 B1**
(45) Date de publication et mention de la délivrance du brevet: **02.08.2023**
(21) Numéro de dépôt: 21181163.3
(22) Date de dépôt: 23.06.2021
(51) Int. Cl.: F17C 13/00

(54) **RÉSERVOIR D'HYDROGÈNE ET CANALISATION D'HYDROGÈNE RECOUVERTS D'UN MATÉRIAU BIDIMENSIONNEL, ET INSTALLATION DE DISTRIBUTION D'HYDROGÈNE**
WASSERSTOFFTANK UND WASSERSTOFFLEITUNG, DIE MIT EINEM ZWEIDIMENSIONALEN MATERIAL BESCHICHTET SIND, UND WASSERSTOFFVERTEILUNGSANLAGE
HYDROGEN TANK AND HYDROGEN PIPE COVERED WITH A TWO-DIMENSIONAL MATERIAL, AND INSTALLATION FOR DISPENSING HYDROGEN

(30) Priorité: 02.07.2020 FR 2006995
(43) Date de publication de la demande: 05.01.2022
(73) Titulaire: Airbus (S.A.S.), 31700 Blagnac (FR)
(72) Inventeur: FORSTER, Richard, 31700 BLAGNAC (FR)
(74) Mandataire: Jardel, Marc Henry Philippe

(56) Documents cités:
- EP-A1- 2 902 692
- EP-A1- 3 381 985
- CN-B- 102 875 805
- JP-A- 2005 180 605

## Description

L'invention est relative au domaine de la distribution d'hydrogène entre un réservoir d'hydrogène et un consommateur d'hydrogène tel par exemple qu'un moteur ou une pile à combustible. L'hydrogène est généralement stocké dans un réservoir sous sa forme dihydrogène (H2), à l'état liquide ou à l'état gazeux. De même, il peut être transféré du réservoir vers le consommateur à l'état liquide ou à l'état gazeux, au moyen d'une ou plusieurs canalisations de distribution d'hydrogène. Le réservoir et les canalisations de distribution sont généralement de type métallique. Il est connu qu'étant donné les petites dimensions des molécules d'hydrogène (H2), ces molécules ont tendance à fuir à travers les parois du réservoir ou des canalisations de distribution, en particulier au niveau de soudures. Il est connu d'utiliser des couches barrières pour revêtir le réservoir ou les canalisations de distribution d'hydrogène afin de réduire les fuites. Toutefois, l'efficacité desdites couches barrières n'est pas parfaite. Par conséquent, afin d'éviter un risque d'explosion, il est nécessaire de prévoir soit un système de ventilation pour évacuer les fuites d'hydrogène, soit un système de neutralisation de l'hydrogène par mélange avec de l'azote. Toutefois, de tels systèmes de ventilation ou de neutralisation présentent l'inconvénient d'augmenter la masse de l'installation de distribution d'hydrogène, ce que l'on souhaite éviter, en particulier lorsque ladite installation de distribution d'hydrogène est installée à bord d'un aéronef.

De plus, les fuites d'hydrogène à travers les parois du réservoir ou des canalisations de distribution peuvent provoquer un phénomène de fragilisation par l'hydrogène (« hydrogen embrittlement » en anglais) qui peut amener à une détérioration du réservoir ou des canalisations de distribution.

Les documents EP 3 381 985 A1, EP 2 902 692 A1 et JP 2005 180605 A décrivent chacun une installation de distribution d'hydrogène dont une surface d'un réservoir ou d'une canalisation est recouverte d'un matériau bidimensionnel.

### EXPOSE DE L'INVENTION :

La présente invention a notamment pour but d'apporter une solution à ces problèmes. Elle concerne une installation de distribution d'hydrogène vers au moins un consommateur d'hydrogène, ladite installation comprenant un réservoir d'hydrogène et au moins une canalisation de distribution d'hydrogène, caractérisée en ce qu'au moins une surface du réservoir d'hydrogène ou de ladite au moins une canalisation de distribution d'hydrogène est recouverte d'un matériau bidimensionnel mélangé à un polymère de type polydopamine.

Le matériau bidimensionnel forme une barrière empêchant le passage de gaz tels que l'hydrogène. Ainsi, la surface recouverte par le matériau bidimensionnel présente l'avantage d'être étanche au passage de l'hydrogène, ce qui permet d'empêcher les fuites d'hydrogène à travers les parois du réservoir d'hydrogène ou des canalisations de distribution d'hydrogène. De plus, un polymère de type polydopamine présente l'avantage d'avoir des propriétés élevées d'adhésion sur une surface sur laquelle il est appliqué. Par conséquent, le fait de mélanger le matériau bidimensionnel avec un tel polymère permet d'améliorer les propriétés d'adhésion du matériau bidimensionnel sur la surface du réservoir ou de la canalisation recouverte par ce matériau bidimensionnel.

Selon différents modes de réalisation pouvant être pris isolément ou en combinaison :
- ladite au moins une surface correspond à une surface interne du réservoir d'hydrogène ou de ladite au moins une canalisation de distribution d'hydrogène ;
- ladite au moins une surface correspond à une surface externe du réservoir d'hydrogène ou de ladite au moins une canalisation de distribution d'hydrogène ;
- le matériau bidimensionnel est choisi parmi les matériaux bidimensionnels suivants :
   . graphène ;
   . oxyde de graphène ;
   . HBN (« Hexagonal Boron Nitride » en anglais) ;
- le matériau bidimensionnel est mélangé à un polymère de type polydopamine ;
- le matériau bidimensionnel est mélangé au polymère de type polydopamine sous forme de plaquettes, dans une proportion massique comprise entre 0,5% et 2% ;
- le mélange du matériau bidimensionnel et du polymère de type polydopamine forme une couche d'épaisseur inférieure à 500 micromètres sur ladite surface du réservoir d'hydrogène ou de ladite au moins une canalisation de distribution d'hydrogène.

L'invention est également relative à un réservoir d'hydrogène comprenant au moins une surface recouverte d'un matériau bidimensionnel.

L'invention est également relative à une canalisation de distribution d'hydrogène comprenant au moins une surface recouverte d'un matériau bidimensionnel.

### DESCRIPTION DETAILLEE :

L'invention sera mieux comprise à la lecture de la description qui suit et à l'examen des figures annexées.

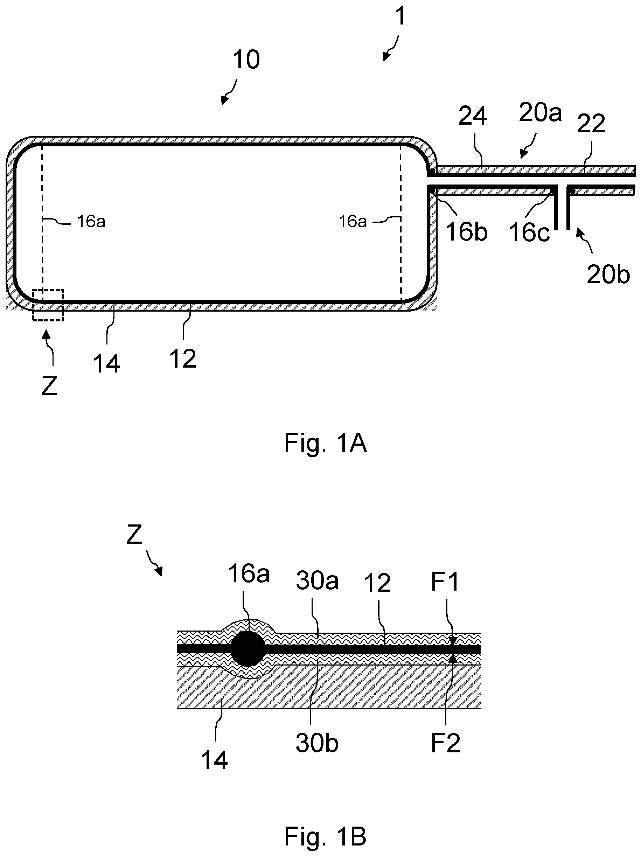

La figure 1A illustre de façon schématique une installation de distribution d'hydrogène conforme à un mode de réalisation de l'invention.
La figure 1B est une vue de détail d'une zone Z de la figure 1A.

L'installation de distribution d'hydrogène 1 représentée sur la figure 1A comprend un réservoir d'hydrogène 10 et un ensemble de canalisations de distribution d'hydrogène 20a, 20b. Le réservoir d'hydrogène 10 comprend une enveloppe 12 dont plusieurs parties sont assemblées entre elles au moyen de soudures 16a. Selon une première alternative, l'enveloppe 12 est métallique. Selon une deuxième alternative, l'enveloppe 12 est réalisée en matériau composite. La canalisation de distribution d'hydrogène 20a comprend un tube 22 soudé au réservoir d'hydrogène 10 au moyen d'une soudure 16b. Le tube 22 est par exemple réalisé dans le même matériau que celui utilisé pour l'enveloppe 12 du réservoir d'hydrogène. La canalisation de distribution d'hydrogène 20b comprend aussi un tube, soudé au tube 22 de la canalisation de distribution d'hydrogène 20a au moyen d'une soudure 16c. Le réservoir d'hydrogène 10 est recouvert, à l'extérieur, d'une couche d'isolant thermique 14. De même, la canalisation de distribution d'hydrogène 20a est recouverte, à l'extérieur, d'une couche d'isolant thermique 24.

L'enveloppe 12 du réservoir d'hydrogène comprend une première face F1 intérieure au réservoir et une deuxième face F2 extérieure au réservoir. La surface d'au moins l'une parmi la première face F1 et la deuxième face F2 est recouverte d'un matériau bidimensionnel. Dans l'exemple illustré sur la figure 1B, la surface de la première face F1 est recouverte d'un matériau bidimensionnel 30a et surface de la deuxième face F2 est recouverte d'un matériau bidimensionnel 30b. Le matériau bidimensionnel 30a et/ou 30b recouvre aussi les soudures 16a.

De préférence, les tubes des canalisations d'hydrogène, tels que le tube 22 de la canalisation d'hydrogène 20a, comprennent aussi au moins une surface recouverte d'un matériau bidimensionnel. Comme pour le réservoir 10, cette surface du tube de la canalisation d'hydrogène peut être une surface intérieure du tube ou une surface extérieure du tube. Le matériau bidimensionnel recouvre aussi les soudures 16b et 16c.

Le matériau bidimensionnel 30a, 30b forme une barrière empêchant le passage de l'hydrogène. Ainsi, la surface recouverte par le matériau bidimensionnel présente l'avantage d'être étanche au passage de l'hydrogène, ce qui permet d'empêcher les fuites d'hydrogène à travers l'enveloppe 12 du réservoir d'hydrogène ou à travers les tubes 22 des canalisations de distribution d'hydrogène.

Le matériau bidimensionnel est par exemple choisi parmi les matériaux bidimensionnels suivants :
- graphène ;
- oxyde de graphène ;
- HBN (« Hexagonal Boron Nitride » en anglais).

Ces exemples de matériaux bidimensionnels ne sont toutefois pas limitatifs de l'invention. D'autres matériaux bidimensionnels peuvent être employés s'ils sont imperméables à l'hydrogène.

Le graphène et le HBN présentent l'avantage d'être imperméables aussi bien à l'hydrogène qu'à l'eau et à la vapeur d'eau. L'oxyde de graphène est imperméable à l'hydrogène, mais pas à la vapeur d'eau. Par conséquent, étant donné que l'hydrogène contenu dans le réservoir d'hydrogène ou dans les canalisations n'est généralement pas parfaitement pur, mais qu'il peut être mélangé à de la vapeur d'eau, le graphène et le HBN peuvent être utilisés quelle que soit la forme, liquide ou gazeuse, sous laquelle l'hydrogène est stocké dans le réservoir 10 ou circule dans les canalisations de distribution 20a, 20b. Lorsque l'hydrogène est stocké dans le réservoir 10 ou circule dans les canalisations de distribution 20a, 20b sous forme liquide, l'oxyde de graphène peut aussi être utilisé comme matériau bidimensionnel puisque l'eau ne peut pas être à l'état de vapeur ou à l'état liquide, mais seulement à l'état solide, pour les températures auxquelles l'hydrogène est à l'état liquide.

De façon avantageuse, le matériau bidimensionnel est mélangé à un polymère de type polydopamine, aussi appelé PDA. Un tel polymère présente l'avantage d'avoir des propriétés élevées d'adhésion sur une surface sur laquelle il est appliqué. Par conséquent, le fait de mélanger le matériau bidimensionnel avec un tel polymère permet d'améliorer les propriétés d'adhésion du matériau bidimensionnel sur une surface du réservoir ou d'une canalisation recouverte par ce matériau bidimensionnel.

Le matériau bidimensionnel est par exemple mélangé au polymère de type polydopamine sous forme de plaquettes. Dans un mode particulier de réalisation, la proportion massique du matériau bidimensionnel (par exemple HBN) dans le mélange est comprise entre 0,5% et 2%.

Dans encore un mode particulier de réalisation, le mélange du matériau bidimensionnel et du polymère de type polydopamine forme une couche d'épaisseur inférieure à 500 micromètres sur la surface du réservoir d'hydrogène ou de la canalisation de distribution d'hydrogène sur laquelle il est appliqué.

Le mélange du matériau bidimensionnel, par exemple HBN, et du polymère de type polydopamine peut être appliqué sur la surface du réservoir ou de la canalisation de différentes façons, par exemple : pulvérisation, pinceau, trempage, impression jet d'encre, etc. Ainsi, ce mélange est facile à appliquer sur cette surface, y compris sur les soudures 16a, 16b, 16c. Par conséquent, l'invention permet de protéger l'ensemble du réservoir et/ou des canalisations de distribution d'hydrogène, y compris les zones de soudure qui sont généralement les plus sensibles aux fuites d'hydrogène.

Lorsque le mélange du matériau bidimensionnel, par exemple HBN, et du polymère de type polydopamine est appliqué sur la surface de la face extérieure F2 du réservoir d'hydrogène (ou des canalisations de distribution d'hydrogène), les propriétés adhésives du polymère de type polydopamine permettent de faciliter l'adhésion, sur cette surface, de l'isolant thermique 14 ou 24.

## Revendications

1. Installation (1) de distribution d'hydrogène vers au moins un consommateur d'hydrogène, ladite installation comprenant un réservoir d'hydrogène (10) et au moins une canalisation de distribution d'hydrogène (20a, 20b), au moins une surface du réservoir d'hydrogène ou de ladite au moins une canalisation de distribution d'hydrogène étant recouverte d'un matériau bidimensionnel (30a, 30b), **caractérisée en ce que** le matériau bidimensionnel est mélangé à un polymère de type polydopamine.

2. Installation selon la revendication 1, **caractérisée en ce que** ladite au moins une surface correspond à une surface interne (F1) du réservoir d'hydrogène ou de ladite au moins une canalisation de distribution d'hydrogène.

3. Installation selon l'une des revendications 1 ou 2, **caractérisée en ce que** ladite au moins une surface correspond à une surface externe (F2) du réservoir d'hydrogène ou de ladite au moins une canalisation de distribution d'hydrogène.

4. Installation selon l'une quelconque des revendications précédentes, **caractérisée en ce que** le matériau bidimensionnel est choisi parmi les matériaux bidimensionnels suivants :
- graphène ;
- oxyde de graphène ;
- HBN (« Hexagonal Boron Nitride » en anglais).

5. Installation selon l'une quelconque des revendications précédentes, **caractérisée en ce que** le matériau bidimensionnel est mélangé au polymère de type polydopamine sous forme de plaquettes, dans une proportion massique comprise entre 0,5% et 2%.

6. Installation selon l'une quelconque des revendications précédentes, **caractérisée en ce que** le mélange du matériau bidimensionnel et du polymère de type polydopamine forme une couche d'épaisseur inférieure à 500 micromètres sur ladite surface du réservoir d'hydrogène ou de ladite au moins une canalisation de distribution d'hydrogène.

7. Réservoir d'hydrogène (10) **caractérisé en ce qu'**il comprend au moins une surface (F1, F2) recouverte d'un matériau bidimensionnel mélangé à un polymère de type polydopamine.

8. Canalisation de distribution d'hydrogène (20a, 20b) **caractérisée en ce qu'**elle comprend au moins une surface recouverte d'un matériau bidimensionnel (30a, 30b) mélangé à un polymère de type polydopamine.

## Patentansprüche

1. Anlage (1) zur Abgabe von Wasserstoff an mindestens einen Wasserstoffverbraucher, wobei die Anlage einen Wasserstofftank (10) und mindestens eine Rohrleitung zur Abgabe von Wasserstoff (20a, 20b) umfasst, wobei mindestens eine Fläche des Wasserstofftanks oder der mindestens einen Rohrleitung zur Abgabe von Wasserstoff von einem zweidimensionalen Material (30a, 30b) bedeckt ist, **dadurch gekennzeichnet, dass** das zweidimensionale Material einem Polymer des Typs Polydopamin beigemeischt ist.

2. Anlage nach Anspruch 1, **dadurch gekennzeichnet, dass** die mindestens eine Fläche einer Innenfläche (F1) des Wasserstofftanks oder der mindestens einen Rohrleitung zur Abgabe von Wasserstoff entspricht.

3. Anlage nach einem der Ansprüche 1 oder 2, **dadurch gekennzeichnet, dass** die mindestens eine Fläche einer Außenfläche (F2) des Wasserstofftanks oder der mindestens einen Rohrleitung zur Abgabe von Wasserstoff entspricht.

4. Anlage nach einem beliebigen der vorhergehenden Ansprüche, **dadurch gekennzeichnet, dass** das zweidimensionale Material aus den folgenden zweidimensionalen Materialien ausgewählt ist:
- Graphen;
- Graphenoxid;
- HBN ("Hexagonal Boron Nitride" auf Englisch).

5. Anlage nach einem beliebigen der vorhergehenden Ansprüche, **dadurch gekennzeichnet, dass** das zweidimensionale Material in Form von Plättchen dem Polymer des Typs Polydopamin beigemischt ist, in einem Massenanteil im Bereich von 0,5 % bis 2 %.

6. Anlage nach einem beliebigen der vorhergehenden Ansprüche, **dadurch gekennzeichnet, dass** die Mischung aus dem zweidimensionalen Material und dem Polymer des Typs Polydopamin eine Schicht mit einer Dicke von weniger als 500 Mikrometern auf der Fläche des Wasserstofftanks oder der mindestens einen Rohrleitung zur Abgabe von Wasserstoff bildet.

7. Wasserstofftank (10), **dadurch gekennzeichnet, dass** er mindestens eine Fläche (F1, F2) umfasst, die mit einem zweidimensionalen Material bedeckt ist, welches einem Polymer des Typs Polydopamin beigemischt ist.

8. Rohrleitung zur Abgabe von Wasserstoff (20a, 20b), **dadurch gekennzeichnet, dass** sie mindestens eine Fläche umfasst, die mit einem zweidimensionalen Material (30a, 30b) bedeckt ist, welches einem Polymer des Typs Polydopamin beigemischt ist.

## Claims

1. Plant (1) for delivering hydrogen to at least one hydrogen consumer, said plant comprising a hydrogen tank (10) and at least one pipe for delivering hydrogen (20a, 20b), at least one surface of the hydrogen tank or of said at least one hydrogen delivery pipe being covered with a two-dimensional material (30a, 30b), **characterized in that** the two-dimensional material is mixed with a polydopamine-type polymer.

2. Plant according to Claim 1, **characterized in that** said at least one surface corresponds to an internal surface (F1) of the hydrogen tank or of said at least one hydrogen delivery pipe.

3. Plant according to either of Claims 1 and 2, **characterized in that** said at least one surface corresponds to an external surface (F2) of the hydrogen tank or of said at least one hydrogen delivery pipe.

4. Plant according to any one of the preceding claims, **characterized in that** the two-dimensional material is chosen from the following two-dimensional materials:
- graphene;
- graphene oxide;
- HBN (Hexagonal Boron Nitride).

5. Plant according to any one of the preceding claims, **characterized in that** the two-dimensional material is mixed with the polydopamine-type polymer in the form of platelets, in a weight proportion of between 0.5% and 2%.

6. Plant according to any one of the preceding claims, **characterized in that** the mixture of the two-dimensional material and of the polydopamine-type polymer forms a layer having a thickness of less than 500 micrometres on said surface of the hydrogen tank or of said at least one hydrogen delivery pipe.

7. Hydrogen tank (10) **characterized in that** it comprises at least one surface (F1, F2) covered with a two-dimensional material mixed with a polydopamine-type polymer.

8. Hydrogen delivery pipe (20a, 20b) **characterized in that** it comprises at least one surface covered with a two-dimensional material (30a, 30b) mixed with a polydopamine-type polymer.
